# EUROPEAN PATENT SPECIFICATION

(11) **EP 3 694 236 B1**
(45) Date of publication and mention of the grant of the patent: **12.02.2025**
(21) Application number: 17928539.0
(22) Date of filing: 11.10.2017
(51) Int. Cl.: H04W 28/02, H04L 5/00, H04W 74/0833, H04W 76/27, H04W 60/02, H04W 60/04, H04W 74/08

(54) **METHOD AND DEVICE FOR DATA TRANSMISSION**
VERFAHREN UND VORRICHTUNG ZUR DATENÜBERTRAGUNG
PROCÉDÉ ET DISPOSITIF POUR LA TRANSMISSION DE DONNÉES

(43) Date of publication of application: 12.08.2020
(73) Proprietor: Beijing Xiaomi Mobile Software Co., Ltd., Beijing 100085 (CN)
(72) Inventor: HONG, Wei, Beijing 100085 (CN)
(74) Representative: Gevers Patents
(86) International application number: PCT/CN2017/105661
(87) International publication number: WO 2019/071462

(56) References cited:
- CN-A- 102 457 825
- CN-A- 103 155 605
- CN-A- 103 155 615
- CN-A- 106 131 886
- LG ELECTRONICS: "Data transmission during random access procedure in MTC", vol. RAN WG1, no. Hangzhou; 20170515 - 20170519, 14 May 2017 (2017-05-14), XP051272778, Retrieved from the Internet <URL:http://www.3gpp.org/ftp/Meetings_3GPP_SYNC/RAN1/Docs/> [retrieved on 20170514]
- INTERDIGITAL INC: "Open Issues on Connection Control Procedures", vol. RAN WG2, no. Prague, Czech Republic; 20171009 - 20171013, 8 October 2017 (2017-10-08), XP051342696, Retrieved from the Internet <URL:http://www.3gpp.org/ftp/Meetings_3GPP_SYNC/RAN2/Docs/> [retrieved on 20171008]
- INTEL CORPORATION: "Email discussion report on [98#30][NR] RRC Connection Control", vol. RAN WG2, no. Qingdao, China; 20170627 - 20170629, 26 June 2017 (2017-06-26), XP051301534, Retrieved from the Internet <URL:http://www.3gpp.org/ftp/Meetings_3GPP_SYNC/RAN2/Docs/> [retrieved on 20170626]
- QUALCOMM INCORPORATED: "Early data transmission", vol. RAN WG1, no. Prague, Czechia; 20170821 - 20170825, 20 August 2017 (2017-08-20), XP051315616, Retrieved from the Internet <URL:http://www.3gpp.org/ftp/Meetings_3GPP_SYNC/RAN1/Docs/> [retrieved on 20170820]
- NEC: "Location Update at RAN-Based Notification Area Boundary", 3GPP TSG-RAN WG2 #98, R2-1705269, 6 May 2017 (2017-05-06), Hangzhou, China, pages 1 - 5, XP051264818

## Description

### TECHNICAL FIELD

The subject disclosure relates to the field of communications, and in particular to a method and device for transmitting data.

### BACKGROUND

A new User Equipment (UE) state, i.e., an inactive state, is introduced in a next-generation communication network, i.e., a 5th Generation (5G) mobile communication technology network. In related art, conventional Long Term Evolution (LTE) network does not support the inactive state, let alone providing a solution for transmitting data directly to UE in the inactive state.

LG ELECTRONICS: "Data transmission during random access procedure in MTC", 3GPP DRAFT R1-1707570, discloses data transmission during random access procedure in MTC.

INTERDIGITAL INC: "Open Issues on Connection Control Procedures", 3GPP DRAFT R2-1710666, discloses open issues on connection control procedures.

INTEL CORPORATION: "Email discussion report on [98#30][NR] RRC Connection Control", 3GPP DRAFT R2-1707038, discloses RRC connection control.

QUALCOMM INCORPORATED: "Early data transmission", 3GPP DRAFT R1-1712804, discloses early data transmission.

### SUMMARY

In view of this, embodiments of the subject disclosure provide a method and device for transmitting data.

The features of the method and device are defined in the independent claims, and the preferable features are defined in the dependent claims

### BRIEF DESCRIPTION OF THE DRAWINGS

A drawing here is incorporated in the subject disclosure, constitutes part of the subject disclosure, illustrates at least one embodiment according to the subject disclosure, and together with the subject disclosure together, serves to explain the principle of the subject disclosure.
FIG. 1 is a flowchart of a method for transmitting data according to an embodiment.
FIG. 2 is a diagram of a scene of a method for transmitting data according to an embodiment.
FIG. 3 is a flowchart of a method for transmitting data according to an embodiment.
FIG. 4 is a flowchart of a method for transmitting data according to an embodiment.
FIG. 5 is a flowchart of a method for transmitting data according to an embodiment.
FIG. 6 is a diagram of a scene of a method for transmitting data according to an embodiment.
FIG. 7 is a flowchart of a method for transmitting data according to an embodiment.
FIG. 8 is a flowchart of a method for transmitting data according to an embodiment.
FIG. 9 is a block diagram of a device for transmitting data according to an embodiment.
FIG. 10 is a block diagram of a device for transmitting data according to an embodiment.
FIG. 11 is a block diagram of a device for transmitting data according to an embodiment.
FIG. 12 is a block diagram of a device for transmitting data according to an embodiment.
FIG. 13 is a block diagram of a device for transmitting data according to an embodiment.
FIG. 14 is a block diagram of a device for transmitting data according to an embodiment.
FIG. 15 is a block diagram of a device for transmitting data according to an embodiment.
FIG. 16 is a block diagram of a device for transmitting data according to an embodiment.
FIG. 17 is a block diagram of a device for transmitting data according to an embodiment.
FIG. 18 is a diagram of a structure of a device for transmitting data according to an embodiment.
FIG. 19 is a diagram of a structure of a device for transmitting data according to an embodiment.

### DETAILED DESCRIPTION

Embodiments (examples of which are illustrated in the accompanying drawings) are elaborated below. The following description refers to the accompanying drawings, in which identical or similar elements in two drawings are denoted by identical reference numerals unless indicated otherwise. Implementations set forth in the following embodiments do not represent all implementations in accordance with the subject disclosure. Rather, they are merely examples of the device and method in accordance with certain aspects herein as recited in the accompanying claims.

Terms used in the subject disclosure are for describing specific embodiments instead of limiting the subject disclosure. Singulars "a/an", "said" and "the" used in the subject disclosure and the appended claims are intended to include the plural form, unless expressly illustrated otherwise by context. The term "and/or" used in the subject disclosure refers to and includes any or all possible combinations of one or more associated items listed.

Note that although a term such as first, second, third may be adopted in an embodiment herein to describe various kinds of information, such information should not be limited to such a term. Such a term is merely for distinguishing information of the same type. For example, without departing from the scope of the embodiments herein, indication information may also be referred to as the second information. Similarly, the second information may also be referred to as the indication information. Depending on the context, a term "if" as used herein may be interpreted as "when" or "while" or "in response to determining that".

The features of the method and device are defined in the independent claims, and the preferable features are defined in the dependent claims. The following may not be according to the invention and be provided just for illustrative purposes.

Any embodiment or example herein which is not fully covered by the independent claims is not part of the present invention.

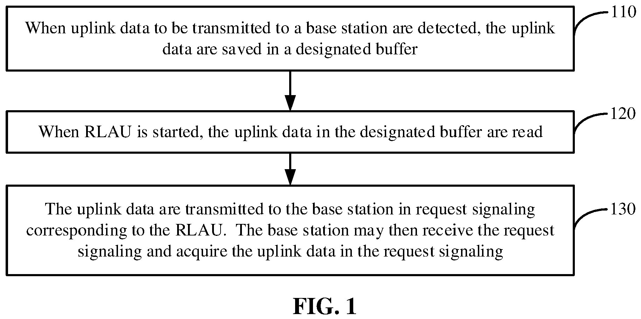

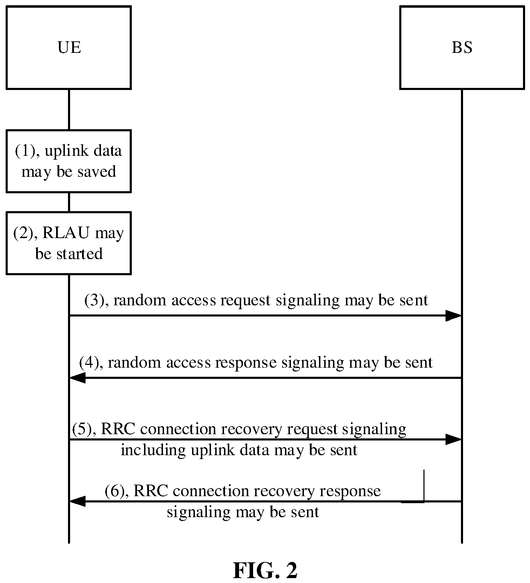

FIG. 1 is a flowchart of a method for transmitting data according to an embodiment. FIG. 2 is a diagram of a scene of a method for transmitting data according to an embodiment. The method for transmitting data may apply to UE. As shown in FIG. 1, the method for transmitting data may include steps 110-130 as follows.

In step 110, when uplink data to be transmitted to a base station are detected, the uplink data are saved in a designated buffer.

According to an embodiment herein, UE is in an inactive state.

When uplink data to be transmitted to a base station are detected, the UE first saves the uplink data in the designated buffer. Then, the uplink data are transmitted to the base station along with request signaling corresponding to Radio Access Network Location Area Update (RLAU) when the UE starts the RLAU. The designated buffer may be a buffer of the UE per se.

In step 120, when RLAU is started, the uplink data in the designated buffer are read.

In step 130, the uplink data are transmitted to the base station in request signaling corresponding to the RLAU. The base station may then receive the request signaling and acquire the uplink data in the request signaling.

According to an embodiment herein, request signaling corresponding to RLAU may be request signaling sent by UE to a base station. The request signaling is random access request signaling sent by UE to a base station. As a mere illustration which is not part of the invention, the request signaling may be Radio Resource Control (RRC) connection recovery request signaling sent by UE to a base station.

As shown in FIG. 2, an illustrative scene includes a base station and UE. As a mere illustration which is not part of the invention, UE transmits uplink data to a base station, for example through RRC connection recovery request signaling.
(1) The UE saves data to be uploaded. Having detected uplink data to be transmitted to a base station, the UE saves the uplink data in a local buffer.
(2) The UE may start RLAU. While starting RLAU, the UE reads the uplink data in the local buffer.
(3) The UE sends random access request signaling to the base station.
(4) The base station may send a random access response instruction to the UE.
(5) The UE may send, to the base station, RRC connection recovery request signaling. The RRC connection recovery request signaling may include the uplink data. This is a mere illustration which may not be part of the invention.
(6) The base station may send the UE an RRC connection recovery response instruction.

With the embodiment, having detected uplink data to be transmitted to a base station, UE first saves the uplink data in a designated buffer. Then, while starting RLAU, the UE reads the uplink data in the designated buffer. The UE transmits the uplink data to the base station through request signaling corresponding to the RLAU, thereby implementing combination of an RLAU flow with data transmission, allowing the base station to receive uplink data transmitted by UE in an inactive state, as well as improving efficiency in data transmission.

According to an embodiment, the RLAU in step 120 may be RLAU triggered by a designated event. Alternatively, the RLAU may be triggered periodically.

The designated event may include, but is not limited to, a situation as follows.

UE may move from one Radio Access Network based Notification Area (RNA) to another RNA.

With the embodiment, UE may transmit uplink data by RLAU triggered by a designated event, RLAU triggered periodically, etc., thereby increasing reliability of data transmission.

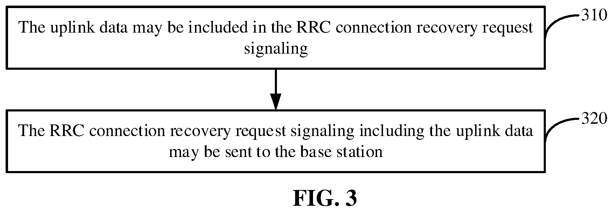

According to an embodiment, as shown in FIG. 3, in step 130, the request signaling may be RRC connection recovery request signaling, which is a mere illustration and may not be part of the invention. In step 130, the uplink data may be transmitted to the base station in the request signaling corresponding to the RLAU through steps 310-320 as follows.

In step 310, the uplink data may be included in the RRC connection recovery request signaling, which is a mere illustration and may not be part of the invention.

In step 320, the RRC connection recovery request signaling including the uplink data may be sent to the base station, which is a mere illustration and may not be part of the invention.

With the embodiment, after RLAU is started, uplink data may be included in RRC connection recovery request signaling. The RRC connection recovery request signaling including the uplink data may be sent to a base station, thereby diversifying modes of transmitting uplink data, increasing practicality in data transmission. This is a mere illustration which may not be part of the invention.

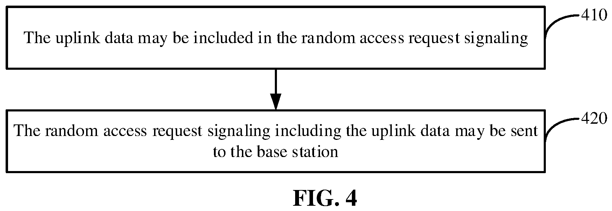

According to an embodiment, as shown in FIG. 4, in step 130, the request signaling is random access request signaling. In step 130, the uplink data may be transmitted to the base station in the request signaling corresponding to the RLAU through steps 410-420 as follows.

In step 410, the uplink data is included in the random access request signaling.

In step 420, the random access request signaling including the uplink data is sent to the base station.

With the embodiment, after RLAU is started, uplink data are included in random access request signaling. The random access request signaling including the uplink data is sent to a base station, thereby diversifying modes of transmitting uplink data, increasing practicality in data transmission.

According to an embodiment, in step 420, the random access request signaling further includes RRC connection recovery request signaling.

In this mode, UE includes both uplink data and RRC connection recovery request signaling in random access request signaling, and then sends the random access request signaling to a base station.

With the embodiment, after RLAU is started, both uplink data and RRC connection recovery request signaling are included in random access request signaling. Then, the random access request signaling is sent to a base station, thereby simplifying an RLAU flow, as well as increasing a rate of data transmission.

With the method for transmitting data according to an embodiment, downlink data may be acquired from a response instruction sent by a base station, implementation of which may include, but is not limited to, any mode as follows.

In one mode, RRC connection recovery response signaling sent by the base station may be received. The RRC connection recovery response signaling may include downlink data to be transmitted to the UE by the base station. Then, the downlink data may be acquired from the RRC connection recovery response signaling.

In a second mode, random response signaling sent by the base station may be received. The random response signaling may include downlink data to be transmitted to the UE by the base station. Then, the downlink data may be acquired from the random response signaling.

With the embodiment, as RRC connection recovery response signaling or random response signaling sent by a base station includes downlink data, UE may acquire the downlink data in the RRC connection recovery response signaling or the random response signaling without having to monitoring paging signaling sent by the base station, thereby diversifying modes of acquiring downlink data by UE, as well as improving efficiency in acquiring downlink data by UE.

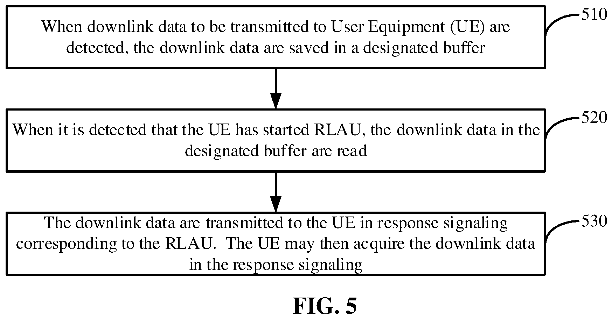

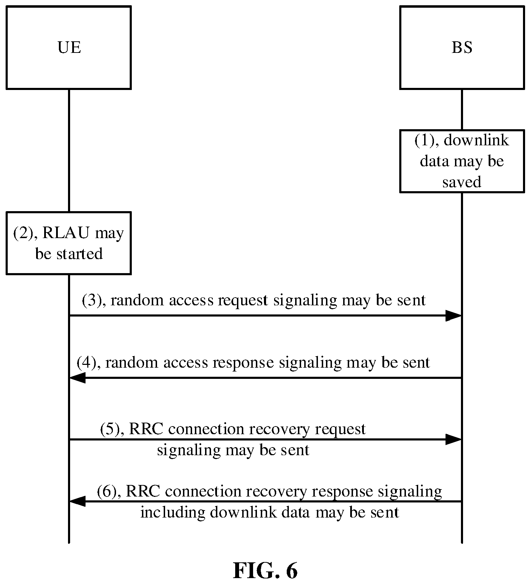

FIG. 5 is a flowchart of a method for transmitting data according to an embodiment. FIG. 6 is a diagram of a scene of a method for transmitting data according to an embodiment. The method for transmitting data may apply to a base station. As shown in FIG. 5, the method for transmitting data may include steps 510-530 as follows.

In step 510, when downlink data to be transmitted to User Equipment (UE) are detected, the downlink data are saved in a designated buffer.

According to an embodiment herein, UE may be one in an inactive state.

When downlink data to be transmitted to the UE are detected, a base station may first save the downlink data in a designated buffer. Then, the downlink data may be transmitted to the UE along with response signaling corresponding to RLAU when the UE starts the RLAU. The designated buffer may be a buffer of the base station per se.

In step 520, when it is detected that the UE has started RLAU, the downlink data are read from the designated buffer.

According to an embodiment herein,

In step 530, the downlink data are transmitted to the UE in response signaling corresponding to the RLAU. The UE may then acquire the downlink data in the response signaling.

According to an embodiment herein, response signaling corresponding to RLAU may be response signaling sent to UE by a base station. The response signaling may be random access response signaling sent to UE by a base station . The response signaling may be RRC connection recovery response signaling sent to UE by a base station.

As shown in FIG. 6, an illustrative scene includes a base station and UE. The base station may transmit downlink data to the UE, for example through RRC connection recovery response signaling.
(1) The base station may save downlink data. Having detected downlink data to be transmitted to the UE, the base station may save the downlink data in a local buffer.
(2) The UE may start RLAU. When the UE starts RLAU, the base station may read the downlink data in the local buffer.
(3) The UE may send a random access request instruction to the base station.
(4) The base station may send random access response signaling to the UE.
(5) The UE may send, to the base station, RRC connection recovery request signaling. This is a mere illustration which may not be part of the invention.
(6) The base station may send the UE an RRC connection recovery response instruction. The RRC connection recovery response instruction may include the downlink data.

With the embodiment, having detected downlink data to be transmitted to UE, instead of triggering paging, a base station may first save the downlink data in a designated buffer. Then, when it is detected that the UE has started RLAU, the base station may read the downlink data in the designated buffer. The base station may transmit the downlink data to the UE through response signaling corresponding to the RLAU, thereby implementing combination of an RLAU flow with data transmission, allowing the base station to transmit downlink data to UE in an inactive state, as well as improving efficiency in data transmission.

According to an embodiment, the RLAU in step 520 may be RLAU triggered by a designated event. Alternatively, the RLAU may be triggered periodically.

The designated event may include, but is not limited to, a situation as follows.

UE may move from one Radio Access Network based Notification Area (RNA) to another RNA.

In addition, in step 520, it may be detected that the UE has started RLAU, in a mode including, but not limited to, a mode as follows.

When receiving random access request signaling sent by the UE, it may be determined, according to the random access request signaling, that the UE has started the RLAU.

With the embodiment, downlink data may be transmitted when UE starts RLAU triggered by a designated event, RLAU triggered periodically, etc., thereby increasing reliability of data transmission.

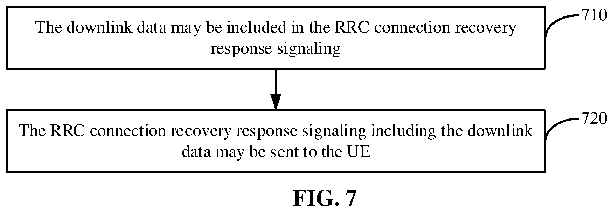

According to an embodiment, as shown in FIG. 7, in step 530, the response signaling may be RRC connection recovery response signaling. In step 530, the downlink data may be transmitted to the UE in the response signaling corresponding to the RLAU through steps 710-720 as follows.

In step 710, the downlink data may be included in the RRC connection recovery response signaling.

In step 720, the RRC connection recovery response signaling including the downlink data may be sent to the UE.

With the embodiment, after UE starts RLAU, a base station may include downlink data in RRC connection recovery response signaling. The base station may send the RRC connection recovery response signaling including the downlink data to the UE, thereby diversifying modes of transmitting downlink data, increasing practicality in data transmission.

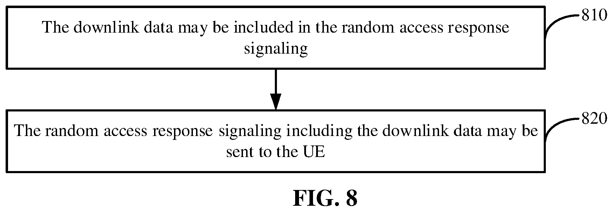

According to an embodiment, as shown in FIG. 8, in step 530, the response signaling may be random access response signaling. In step 530, the downlink data may be transmitted to the UE in the response signaling corresponding to the RLAU through steps 810-820 as follows.

In step 810, the downlink data may be included in the random access response signaling.

In step 820, the random access response signaling including the downlink data may be sent to the UE.

With the embodiment, after UE starts RLAU, a base station may include downlink data in random access response signaling. The base station may send the random access response signaling including the downlink data to the UE, increasing practicality in data transmission.

According to an embodiment, in step 820, the random access response signaling may further include RRC connection recovery response signaling.

In this mode, a base station may include both downlink data and RRC connection recovery response signaling in random access response signaling. Then, the base station may send the random access response signaling to the UE.

With the embodiment, after UE starts RLAU, a base station may include both downlink data and RRC connection recovery response signaling in random access response signaling. Then, the base station may send the random access response signaling to the UE, thereby simplifying an RLAU flow, as well as increasing a rate of data transmission.

With the method for transmitting data according to an embodiment, uplink data may be acquired from a request instruction sent by UE, implementation of which may include, but is not limited to, any mode as follows.

When RRC connection recovery request signaling sent by the UE is received and the RRC connection recovery request signaling includes uplink data to be transmitted to the base station by the UE, the uplink data in the RRC connection recovery request signaling may be acquired. This is a mere illustration which may not be part of the invention.

When random access request signaling sent by the UE including uplink data is received, the uplink data in the random access request signaling are acquired.

With the embodiment, as random access request signaling sent by UE includes uplink data, a base station acquires the uplink data in the random access request signaling and may acquire the uplink data in the RRC connection recovery request signaling, thereby diversifying modes of acquiring uplink data by a base station, as well as improving efficiency in acquiring uplink data by a base station.

A device for transmitting data according to an embodiment herein corresponds to the method for transmitting data according to an aforementioned embodiment herein.

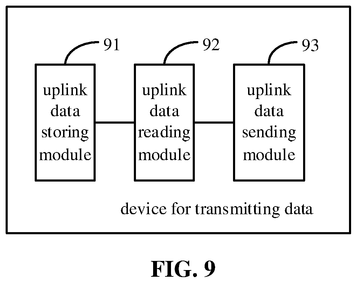

FIG. 9 is a block diagram of a device for transmitting data according to an embodiment. The device may apply to UE. The device may be adapted to executing the method for transmitting data shown in FIG. 1. As shown in FIG. 9, the device for transmitting data may include an uplink data storing module, an uplink data reading module, and an uplink data sending module.

The uplink data storing module 91 may be adapted to, in response to uplink data to be transmitted to a base station being detected, saving the uplink data in a designated buffer.

The uplink data reading module 92 is adapted to, in response to Radio Access Network Location Area Update (RLAU) being started, reading the uplink data in the designated buffer.

The uplink data sending module 93 may be adapted to transmitting the uplink data to the base station in request signaling corresponding to the RLAU. The base station then acquires the uplink data in the request signaling.

With the embodiment, having detected uplink data to be transmitted to a base station, UE first saves the uplink data in a designated buffer. Then, while starting RLAU, the UE reads the uplink data in the designated buffer. The UE transmits the uplink data to the base station through request signaling corresponding to the RLAU, thereby implementing combination of an RLAU flow with data transmission, allowing the base station to receive uplink data transmitted by UE in an inactive state, as well as improving efficiency in data transmission.

According to an embodiment, the device shown in FIG. 9 has been built. The RLAU may be RLAU triggered by a designated event. Alternatively, the RLAU may be triggered periodically.

With the embodiment, UE may transmit uplink data by RLAU triggered by a designated event, RLAU triggered periodically, etc., thereby increasing reliability of data transmission.

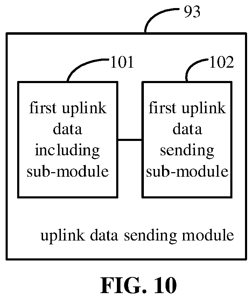

According to an embodiment, the device shown in FIG. 9 has been built. The request signaling may be Radio Resource Control (RRC) connection recovery request signaling, which is a mere illustration which may not be part of the invention. As shown in FIG. 10, the uplink data sending module 93 may include a first uplink data including sub-module and a first uplink data sending sub-module.

The first uplink data including sub-module 101 may be adapted to including the uplink data in the RRC connection recovery request signaling.

The first uplink data sending sub-module 102 may be adapted to sending, to the base station, the RRC connection recovery request signaling including the uplink data.

With the embodiment, after RLAU is started, uplink data may be included in RRC connection recovery request signaling. The RRC connection recovery request signaling including the uplink data may be sent to a base station, thereby diversifying modes of transmitting uplink data, increasing practicality in data transmission.

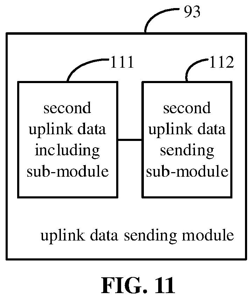

According to an embodiment, the device shown in FIG. 9 has been built. The request signaling is random access request signaling. As shown in FIG. 11, the uplink data sending module 93 may include a second uplink data including sub-module and a second uplink data sending sub-module.

The second uplink data including sub-module 111 is adapted to including the uplink data in the random access request signaling.

The second uplink data sending sub-module 112 is adapted to sending, to the base station, the random access request signaling including the uplink data.

With the embodiment, after RLAU is started, uplink data are included in random access request signaling. The random access request signaling including the uplink data is sent to a base station, thereby diversifying modes of transmitting uplink data, increasing practicality in data transmission.

According to an embodiment, the device shown in FIG. 11 has been built. The random access request signaling further includes RRC connection recovery request signaling.

With the embodiment, after RLAU is started, both uplink data and RRC connection recovery request signaling are included in random access request signaling. Then, the random access request signaling is sent to a base station, thereby simplifying an RLAU flow, as well as increasing a rate of data transmission.

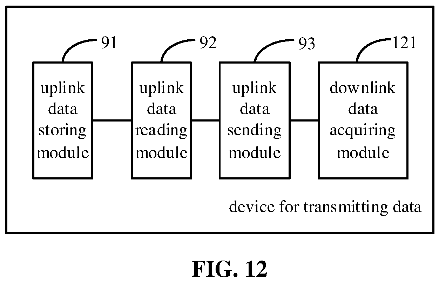

According to an embodiment, the device shown in FIG. 9 has been built. As shown in FIG. 12, the device for transmitting data may further include a downlink data acquiring module.

The downlink data acquiring module 121 may be adapted to acquiring downlink data in RRC connection recovery response signaling, if the RRC connection recovery response signaling sent by the base station is received and the RRC connection recovery response signaling includes the downlink data to be transmitted to the UE by the base station.

The downlink data acquiring module may be adapted to acquiring downlink data in random response signaling, if the random response signaling sent by the base station is received and the random response signaling includes the downlink data.

With the embodiment, as RRC connection recovery response signaling or random response signaling sent by a base station includes downlink data, UE may acquire the downlink data in the RRC connection recovery response signaling or the random response signaling without having to monitoring paging signaling sent by the base station, thereby diversifying modes of acquiring downlink data by UE, as well as improving efficiency in acquiring downlink data by UE.

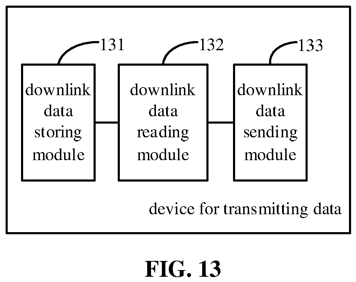

FIG. 13 is a block diagram of a device for transmitting data according to an embodiment. The device may apply to a base station. The device may be adapted to executing the method for transmitting data shown in FIG. 5. As shown in FIG. 13, the device for transmitting data may include a downlink data storing module, a downlink data reading module, and a downlink data sending module.

The downlink data storing module 131 may be adapted to, in response to detecting downlink data to be transmitted to User Equipment (UE), saving the downlink data in a designated buffer.

The downlink data reading module 132 may be adapted to, in response to detecting that the UE has started Radio Access Network Location Area Update (RLAU), reading the downlink data in the designated buffer.

The downlink data sending module 133 may be adapted to transmitting the downlink data to the UE in response signaling corresponding to the RLAU. The UE then acquires the downlink data in the response signaling.

With the embodiment, having detected downlink data to be transmitted to UE, instead of triggering paging, a base station may first save the downlink data in a designated buffer. Then, when it is detected that the UE has started RLAU, the base station may read the downlink data in the designated buffer. The base station may transmit the downlink data to the UE through response signaling corresponding to the RLAU, thereby implementing combination of an RLAU flow with data transmission, allowing the base station to transmit downlink data to UE in an inactive state, as well as improving efficiency in data transmission.

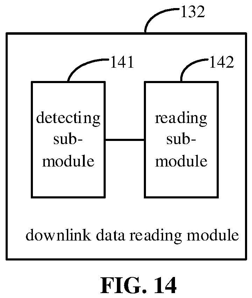

According to an embodiment, the device shown in FIG. 13 has been built. The RLAU may be RLAU triggered by a designated event. Alternatively, the RLAU may be triggered periodically. As shown in FIG. 14, the downlink data reading module 132 may include a detecting sub-module and a reading sub-module.

The detecting sub-module 141 may be adapted to, in response to receiving random access request signaling sent by the UE, determining, according to the random access request signaling, that the UE has started the RLAU.

The reading sub-module 142 may be adapted to reading the downlink data in the designated buffer.

With the embodiment, downlink data may be transmitted when UE starts RLAU triggered by a designated event, RLAU triggered periodically, etc., thereby increasing reliability of data transmission.

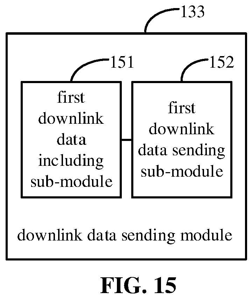

According to an embodiment, the device shown in FIG. 13 or FIG. 14 has been built. The response signaling may be RRC connection recovery response signaling. As shown in FIG. 15, the downlink data sending module 133 may include a first downlink data including sub-module and a first downlink data sending sub-module.

The first downlink data including sub-module 151 may be adapted to including the downlink data in the RRC connection recovery response signaling.

The first downlink data sending sub-module 152 may be adapted to sending, to the UE, the RRC connection recovery response signaling including the downlink data.

With the embodiment, after UE starts RLAU, a base station may include downlink data in RRC connection recovery response signaling. The base station may send the RRC connection recovery response signaling including the downlink data to the UE, thereby diversifying modes of transmitting downlink data, increasing practicality in data transmission.

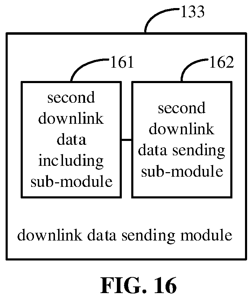

According to an embodiment, the device shown in FIG. 13 or FIG. 14 has been built. The response signaling may be random access response signaling. As shown in FIG. 16, the downlink data sending module 133 may include a second downlink data including sub-module and a second downlink data sending sub-module.

The second downlink data including sub-module 161 may be adapted to including the downlink data in the random access response signaling.

The second downlink data sending sub-module 162 may be adapted to sending, to the UE, the random access response signaling including the downlink data.

With the embodiment, after UE starts RLAU, a base station may include downlink data in random access response signaling. The base station may send the random access response signaling including the downlink data to the UE, increasing practicality in data transmission.

According to an embodiment, the device shown in FIG. 16 has been built. The random access response signaling may further include RRC connection recovery response signaling.

With the embodiment, after UE starts RLAU, a base station may include both downlink data and RRC connection recovery response signaling in random access response signaling. Then, the base station may send the random access response signaling to the UE, thereby simplifying an RLAU flow, as well as increasing a rate of data transmission.

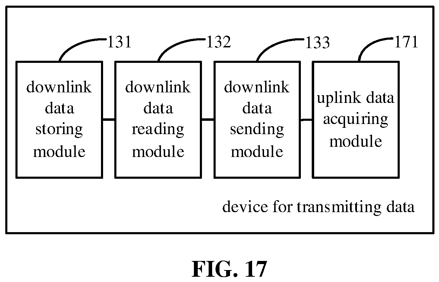

According to an embodiment, the device shown in FIG. 13 or FIG. 14 has been built. As shown in FIG. 17, the device for transmitting data may further include an uplink data acquiring module.

The uplink data acquiring module 171 may be adapted to, in response to receiving Radio Resource Control (RRC) connection recovery request signaling sent by the UE including uplink data to be transmitted to the base station by the UE, acquiring the uplink data in the RRC connection recovery request signaling.

The uplink data acquiring module may be adapted to, in response to receiving random response signaling sent by the UE including the uplink data, acquiring the uplink data in the random response signaling.

With the embodiment, as random access request signaling sent by UE includes uplink data, a base station acquires the uplink data in the random access request signaling and may acquire the uplink data in the RRC connection recovery request signaling, thereby diversifying modes of acquiring uplink data by a base station, as well as improving efficiency in acquiring uplink data by a base station.

A device embodiment herein basically corresponds to a method embodiment herein, description of which may be referred to for a related part of the device embodiment. A device embodiment described herein is but schematic. Units described herein as separate parts may or may not be physically separate. A part displayed as a unit may or may not be a physical unit. That is, it may be located in one place, or distributed over multiple network units. Some or all of the modules herein may be selected as needed to achieve an effect of a solution herein. A person having ordinary skill in the art may understand and implement the above without creative effort.

According to an embodiment herein, a non-transitory computer-readable storing medium has stored thereon a computer program adapted to performing the method for transmitting data as shown in any one of FIG. 1 to FIG. 4.

According to an embodiment herein, a non-transitory computer-readable storing medium has stored thereon a computer program adapted to performing the method for transmitting data as shown in any one of FIG. 5 to FIG. 8 .

According to an embodiment herein, a device for transmitting data may apply to UE. The device includes a processor and memory.

The memory is adapted to storing an instruction executable by the processor.

The processor is adapted to:
in response to uplink data to be transmitted to a base station being detected, saving the uplink data in a designated buffer;
in response to Radio Access Network Location Area Update (RLAU) being started, reading the uplink data in the designated buffer; and
transmitting the uplink data to the base station in request signaling corresponding to the RLAU, such that the base station acquires the uplink data in the request signaling.

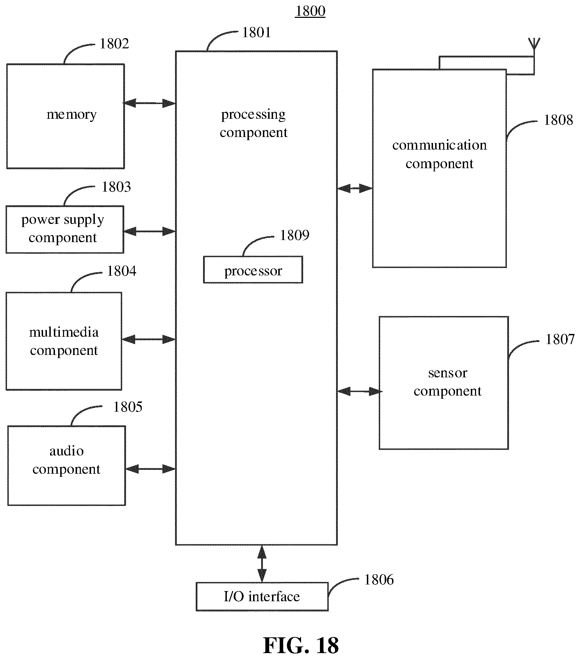

FIG. 18 is a diagram of a structure of a device for transmitting data according to an embodiment. A device 1800 for transmitting data according to an embodiment is as shown in FIG. 18. The device 1800 may be UE such as a computer, a mobile phone, a digital broadcast terminal, messaging equipment, a gaming console, tablet equipment, medical equipment, exercise equipment, a personal digital assistant, etc.

Referring to FIG. 18, the device 1800 may include at least one of a processing component 1801, memory 1802, a power supply component 1803, a multimedia component 1804, an audio component 1805, an Input / Output (I / O) interface 1806, a sensor component 1807, or a communication component 1808.

The processing component 1801 may generally control an overall operation of the device 1800, such as operations associated with display, a telephone call, data communication, a camera operation, a recording operation, etc. The processing component 1801 may include one or more processors 1809 to execute instructions so as to complete all or a part of an aforementioned method. In addition, the processing component 1801 may include one or more modules to facilitate interaction between the processing component 1801 and other components. For example, the processing component 1801 may include a multimedia portion to facilitate interaction between the multimedia component 1804 and the processing component 1801.

The memory 1802 may be adapted to storing various types of data to support the operation at the device 1800. Examples of such data may include instructions of any application or method adapted to operating on the device 1800, contact data, phonebook data, messages, pictures, videos, etc. The memory 1802 may be realized by any type of transitory or non-transitory storage equipment or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, a magnetic disk, a compact disk, etc.

The power supply component 1803 may supply electric power to various components of the device 1800. The power supply component 1803 may include a power management system, one or more power sources, and other components related to generating, managing, and distributing electricity for the device 1800.

The multimedia component 1804 may include a screen that provides an output interface between the device 1800 and a user. The screen may include a Liquid Crystal Display (LCD), a Touch Panel (TP), etc. If the screen includes a TP, the screen may be realized as a touch screen to receive a signal input by a user. The TP may include one or more touch sensors for sensing touch, slide, and gestures on the TP. The one or more touch sensors not only may sense the boundary of a touch or slide move, but also detect the duration and pressure related to the touch or slide move. The multimedia component 1804 may include at least one of a front camera or a rear camera. When the device 1800 is in an operation mode such as a photographing mode or a video mode, at least one of the front camera or the rear camera may receive external multimedia data. Each of the front camera or the rear camera may be a fixed optical lens system or may have a focal length and be capable of optical zooming.

The audio component 1805 may be adapted to outputting and / or inputting an audio signal. For example, the audio component 1805 may include a microphone (MIC). When the device 1800 is in an operation mode such as a call mode, a recording mode, a voice recognition mode, etc., the MIC may be adapted to receiving an external audio signal. The received audio signal may be further stored in the memory 1802 or may be sent via the communication component 1808. The audio component 1805 may further include a loudspeaker adapted to outputting the audio signal.

The I / O interface 1806 may provide an interface between the processing component 1801 and a peripheral interface portion. Such a peripheral interface portion may be a keypad, a click wheel, a button, etc. Such a button may include but is not limited to at least one of a homepage button, a volume button, a start button, or a lock button.

The sensor component 1807 may include one or more sensors for assessing various states of the device 1800. For example, the sensor component 1807 may detect an on/off state of the device 1800 and relative positioning of components such as the display and the keypad of the device 1800. The sensor component 1807 may further detect a change in the position of the device 1800 or of a component of the device 1800, whether there is contact between the device 1800 and a user, the orientation or acceleration / deceleration of the device 1800, a change in the temperature of the device 1800, etc. The sensor component 1807 may include a proximity sensor adapted to detecting existence of a nearby object without physical contact. The sensor component 1807 may further include an optical sensor such as a Complementary Metal-Oxide-Semiconductor (CMOS) or a Charge-Coupled-Device (CCD) image sensor used in an imaging application. The sensor component 1807 may further include an acceleration sensor, a gyroscope sensor, a magnetic sensor, a pressure sensor, a temperature sensor, etc.

The communication component 1808 may be adapted to facilitating wired or wireless communication between the device 1800 and other equipment. The device 1800 may access a wireless network based on a communication standard such as Wi-Fi, 2G, 3G..., or a combination thereof. The communication component 1808 may broadcast related information or receive a broadcast signal from an external broadcast management system via a broadcast channel. The communication component 1808 may include a Near Field Communication (NFC) module for short-range communication. For example, the NFC module may be based on technology such as Radio Frequency Identification (RFID), Infrared Data Association (IrDA), Ultra-Wideband (UWB) technology, Bluetooth (BT), etc.

The device 1800 may be realized by one or more electronic components such as an Application Specific Integrated Circuit (ASIC), a Digital Signal Processor (DSP), a Digital Signal Processing Device (DSPD), a Programmable Logic Device (PLD), a Field Programmable Gate Array (FPGA), a controller, a microcontroller, a microprocessor, etc., to implement the method.

A computer-readable storage medium including instructions, such as memory 1802 including instructions, may be provided. The instructions may be executed by the processor 1809 of the device 1800 to implement an aforementioned method. For example, the computer-readable storage medium may be Read-Only Memory (ROM), Random Access Memory (RAM), Compact Disc Read-Only Memory (CD-ROM), a magnetic tape, a floppy disk, optical data storage equipment, etc.

When executed by the processor, an instruction in the storage medium causes the device 1800 to perform at least part of any aforementioned method for transmitting data.

According to an embodiment herein, a device for transmitting data may apply to a base station. The device includes a processor and memory.

The memory is adapted to storing an instruction executable by the processor.

The processor is adapted to:
in response to detecting downlink data to be transmitted to User Equipment (UE), saving the downlink data in a designated buffer;
in response to detecting that the UE has started Radio Access Network Location Area Update (RLAU), reading the downlink data in the designated buffer; and
transmitting the downlink data to the UE in response signaling corresponding to the RLAU, such that the UE acquires the downlink data in the response signaling.

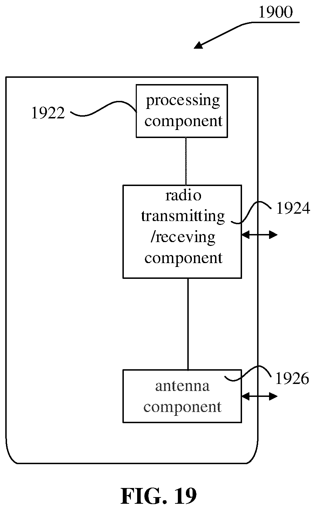

FIG. 19 is a diagram of a structure of a device for transmitting data according to an embodiment. The device 1900 as shown in FIG. 19 may be provided as a base station. Referring to FIG. 19, the device 1900 includes a processing component 1922, a radio transmitting/receiving component 1924, an antenna component 1926, and a signal processing part dedicated to a radio interface. The processing component 1922 may further include one or more processors.

A processor of the processing component 1922 may be adapted to performing any aforementioned method for connecting a network.

Other embodiments according to the subject disclosure will be apparent to one skilled in the art after he/she has considered the subject disclosure and practiced the invention disclosed herein. The subject application is intended to cover any variation, use, or adaptation of the subject disclosure following the general principle of the subject disclosure and including such departures from the subject disclosure as come within knowledge or customary practice in the art. The subject disclosure and its embodiments are intended to be illustrative, with the scope of the invention being indicated by the appended claims.

The subject disclosure is not limited to the exact construction that has been described above and illustrated in the accompanying drawings. It is intended that the scope of the subject disclosure be limited only by the appended claims.

## Claims

1. A method for transmitting data, comprising:
in response to uplink data to be transmitted to a base station (1900) being detected, saving, by User Equipment, UE (1800), in an inactive state, the uplink data in a designated buffer (110);
in response to Radio Access Network Location Area Update, RLAU, being started, reading, by the UE (1800), the uplink data in the designated buffer (120); and
transmitting, by the UE (1800), the uplink data to the base station (1900) in request signaling corresponding to the RLAU, such that the base station (1900) acquires the uplink data in the request signaling (130),
wherein the request signaling is random access request signaling,
wherein the transmitting the uplink data to the base station (1900) in request signaling corresponding to the RLAU comprises:
including, by the UE (1800), the uplink data in the random access request signaling (410); and
sending, by the UE (1800) to the base station (1900), the random access request signaling including the uplink data (420),
**characterized in that** the random access request signaling further comprises Radio Resource Control, RRC, connection recovery request signaling.

2. The method of claim 1, wherein the RLAU comprises RLAU triggered by a designated event and RLAU triggered periodically.

3. The method of claim 1 or 2, further comprising:
in response to receiving Radio Resource Control, RRC, connection recovery response signaling sent by the base station (1900) including downlink data to be transmitted to the UE (1800) by the base station (1900), acquiring, by the UE (1800), the downlink data in the RRC connection recovery response signaling; or
in response to receiving random response signaling sent by the base station (1900) including the downlink data, acquiring, by the UE (1800), the downlink data in the random response signaling.

4. The method of any one of claims 1 to 3, further comprising:
receiving, by the base station (1900), the uplink data transmitted by the UE (1800) in the random access request signaling.

5. The method of claim 4, further comprising:
in response to detecting downlink data to be transmitted to the UE (1800), saving, by the base station (1900), the downlink data in a second designated buffer (510);
in response to detecting that the UE (1800) has started the RLAU, reading, by the base station (1900), the downlink data in the second designated buffer (520); and
transmitting, by the base station (1900), the downlink data to the UE (1800) in response signaling corresponding to the RLAU, such that the UE (1800) acquires the downlink data in the response signaling (530).

6. The method of claim 5, wherein the RLAU comprises RLAU triggered by a designated event and RLAU triggered periodically,
wherein the detecting that the UE (1800) has started the RLAU comprises:
in response to receiving the random access request signaling sent by the UE (1800), determining, by the base station (1900) according to the random access request signaling, that the UE (1800) has started the RLAU.

7. The method of claim 5 or 6, wherein the response signaling is Radio Resource Control, RRC, connection recovery response signaling,
wherein the transmitting the downlink data to the UE (1800) in the response signaling corresponding to the RLAU comprises:
including, by the base station (1900), the downlink data in the RRC connection recovery response signaling; and
sending, by the base station (1900) to the UE (1800), the RRC connection recovery response signaling including the downlink data.

8. The method of claim 5 or 6, wherein the response signaling is random access response signaling,
wherein the transmitting the downlink data to the UE (1800) in the response signaling corresponding to the RLAU comprises:
including, by the base station (1900), the downlink data in the random access response signaling (810); and
sending, by the base station (1900) to the UE (1800), the random access response signaling including the downlink data (820).

9. The method of claim 8, wherein the random access response signaling further comprises Radio Resource Control, RRC, connection recovery response signaling.

10. A device for transmitting data, for example User Equipment, UE (1800), the device comprising a processor (1809) and memory (1802),
wherein the memory (1802) is adapted to storing an instruction executable by the processor (1809),
wherein the processor (1809) is adapted to executing the method of any one of claims 1 to 3.

## Patentansprüche

1. Verfahren zum Übertragen von Daten, umfassend:
als Reaktion auf das Erfassen von Uplink-Daten, die an eine Basisstation (1900) übertragen werden sollen, Speichern der Uplink-Daten durch das Endgerät, UE (1800), in einem inaktiven Zustand in einem ausgewiesenen Puffer (110);
als Reaktion auf das Starten des Radio Access Network Location Area Update, RLAU, Lesen der Uplink-Daten im ausgewiesenen Puffer (120) durch das UE (1800); und
Übertragen der Uplink-Daten durch das UE (1800) an die Basisstation (1900) in einer Anforderungssignalisierung, die dem RLAU entspricht, so dass die Basisstation (1900) die Uplink-Daten in der Anforderungssignalisierung (130) erhebt,
wobei die Anforderungssignalisierung eine Zufallszugriffsanforderungssignalisierung ist,
wobei das Übertragen der Uplink-Daten an die Basisstation (1900) in einer dem RLAU entsprechenden Anforderungssignalisierung Folgendes umfasst:
Einschließen der Uplink-Daten durch das UE (1800) in die Zufallszugriffsanforderungssignalisierung (410); und
Senden der Zufallszugriffsanforderungssignalisierung einschließlich der Uplink-Daten (420) durch das UE (1800) an die Basisstation (1900),
**dadurch gekennzeichnet, dass** die Zufallszugriffsanforderungssignalisierung weiter eine Radio-Resource-Control-, RRC-, Verbindungswiederherstellungs-Anforderungssignalisierung umfasst.

2. Verfahren nach Anspruch 1, wobei das RLAU RLAU umfasst, das durch ein ausgewiesenes Ereignis ausgelöst wird, und RLAU, das periodisch ausgelöst wird.

3. Verfahren nach Anspruch 1 oder 2, weiter umfassend:
als Reaktion auf das Empfangen einer von der Basisstation (1900) gesendeten Radio-Resource-Control-, RRC-, Verbindungswiederherstellungs-Antwortsignalisierung, die Downlink-Daten einschließt, die von der Basisstation (1900) an das UE (1800) zu übertragen sind, Erheben der Downlink-Daten in der RRC-Verbindungswiederherstellungs-Antwortsignalisierung durch das UE (1800); oder
als Reaktion auf den Empfang einer von der Basisstation (1900) gesendeten Zufallsantwortsignalisierung, die die Downlink-Daten einschließt, Erheben der Downlink-Daten in der Zufallsantwortsignalisierung durch das UE (1800).

4. Verfahren nach einem der Ansprüche 1 bis 3, weiter umfassend:
Empfangen durch die Basisstation (1900), der Uplink-Daten, die von dem UE (1800) in der Zufallszugriffsanforderungssignalisierung übertragen werden.

5. Verfahren nach Anspruch 4, weiter umfassend:
als Reaktion auf das Erfassen von Downlink-Daten, die an das UE (1800) übertragen werden sollen, Speichern der Downlink-Daten durch die Basisstation (1900) in einem zweiten ausgewiesenen Puffer (510);
als Reaktion auf das Erfassen, dass das UE (1800) das RLAU gestartet hat, Lesen der Downlink-Daten in dem zweiten ausgewiesenen Puffer (520) durch die Basisstation (1900); und
Übertragen der Downlink-Daten durch die Basisstation (1900) an das UE (1800) in einer dem RLAU entsprechenden Antwortsignalisierung derart, dass das UE (1800) die Downlink-Daten in der Antwortsignalisierung (530) erhebt.

6. Verfahren nach Anspruch 5, wobei das RLAU RLAU umfasst, das durch ein ausgewiesenes Ereignis ausgelöst wird, und RLAU, das periodisch ausgelöst wird,
wobei das Erfassen, dass das UE (1800) das RLAU gestartet hat, Folgendes umfasst:
als Reaktion auf den Empfang der von dem UE (1800) gesendeten Zufallszugriffsanforderungssignalisierung, Bestimmen durch die Basisstation (1900) gemäß der Zufallszugriffsanforderungssignalisierung, dass das UE (1800) das RLAU gestartet hat.

7. Verfahren nach Anspruch 5 oder 6, wobei die Antwortsignalisierung eine Radio-Resource-Control-, RRC-, Verbindungswiederherstellungs-Antwortsignalisierung ist,
wobei das Übertragen der Downlink-Daten an das UE (1800) in der dem RLAU entsprechenden Antwortsignalisierung Folgendes umfasst:
Einschließen der Downlink-Daten durch die Basisstation (1900) in die RRC-Verbindungswiederherstellungs-Antwortsignalisierung; und
Senden der RRC-Verbindungswiederherstellungs-Antwortsignalisierung einschließlich der Downlink-Daten durch die Basisstation (1900) an das UE (1800).

8. Verfahren nach Anspruch 5 oder 6, wobei die Antwortsignalisierung eine Zufallszugriffsantwortsignalisierung ist,
wobei das Übertragen der Downlink-Daten an das UE (1800) in der dem RLAU entsprechenden Antwortsignalisierung Folgendes umfasst:
Einschließen der Downlink-Daten in die Zufallszugriffsantwortsignalisierung (810) durch die Basisstation (1900); und
Senden der Zufallszugriffsantwortsignalisierung einschließlich der Downlink-Daten (820) durch die Basisstation (1900) an das UE (1800).

9. Verfahren nach Anspruch 8, wobei die Zufallszugriffsantwortsignalisierung weiter eine Radio-Resource-Control-, RRC-, Verbindungswiederherstellungs-Antwortsignalisierung umfasst.

10. Vorrichtung zum Übertragen von Daten, beispielsweise Endgerät, UE (1800), wobei die Vorrichtung einen Prozessor (1809) und einen Speicher (1802) umfasst,
wobei der Speicher (1802) dazu angepasst ist, eine Anweisung zu speichern, die von dem Prozessor (1809) ausführbar ist,
wobei der Prozessor (1809) dazu angepasst ist, das Verfahren nach einem der Ansprüche 1 bis 3 auszuführen.

## Revendications

1. Procédé de transmission de données, comprenant :
à la suite de la détection de données de liaison montante à transmettre à une station de base (1900), l'enregistrement, par un équipement utilisateur, UE, (1800), dans un état inactif, des données de liaison montante dans une mémoire tampon désignée (110) ;
à la suite du démarrage d'une mise à jour de zone de localisation de réseau d'accès radio, RLAU, la lecture, par l'UE (1800), des données de liaison montante dans la mémoire tampon désignée (120) ; et
la transmission, par l'UE (1800), des données de liaison montante à la station de base (1900) dans une signalisation de demande correspondant à la RLAU, de telle sorte que la station de base (1900) acquière les données de liaison montante dans la signalisation de demande (130),
dans lequel la signalisation de demande est une signalisation de demande d'accès aléatoire,
dans lequel la transmission des données de liaison montante à la station de base (1900) dans une signalisation de demande correspondant à la RLAU comprend :
l'inclusion, par l'UE (1800), des données de liaison montante dans la signalisation de demande d'accès aléatoire (410) ; et
l'envoi, par l'UE (1800) à la station de base (1900), de la signalisation de demande d'accès aléatoire incluant les données de liaison montante (420),
**caractérisé en ce que** la signalisation de demande d'accès aléatoire comprend en outre une signalisation de demande de récupération de connexion de commande de ressources radio, RRC.

2. Procédé selon la revendication 1, dans lequel la RLAU comprend une RLAU déclenchée par un événement désigné et une RLAU déclenchée périodiquement.

3. Procédé selon la revendication 1 ou 2, comprenant en outre :
à la suite de la réception d'une signalisation de réponse de récupération de connexion de commande de ressources radio, RRC, envoyée par la station de base (1900) incluant des données de liaison descendante à transmettre à l'UE (1800) par la station de base (1900), l'acquisition, par l'UE (1800), des données de liaison descendante dans la signalisation de réponse de récupération de connexion de RRC ; ou
à la suite de la réception d'une signalisation de réponse aléatoire envoyée par la station de base (1900) incluant les données de liaison descendante, l'acquisition, par l'UE (1800), des données de liaison descendante dans la signalisation de réponse aléatoire.

4. Procédé selon l'une quelconque des revendications 1 à 3, comprenant en outre :
la réception, par la station de base (1900), des données de liaison montante transmises par l'UE (1800) dans la signalisation de demande d'accès aléatoire.

5. Procédé selon la revendication 4, comprenant en outre :
à la suite de la détection de données de liaison descendante à transmettre à l'UE (1800), l'enregistrement, par la station de base (1900), des données de liaison descendante dans une seconde mémoire tampon désignée (510) ;
à la suite de la détection que l'UE (1800) a démarré la RLAU, la lecture, par la station de base (1900), des données de liaison descendante dans la seconde mémoire tampon désignée (520) ; et
la transmission, par la station de base (1900), des données de liaison descendante à l'UE (1800) dans une signalisation de réponse correspondant à la RLAU de telle sorte que l'UE (1800) acquière les données de liaison descendante dans la signalisation de réponse (530).

6. Procédé selon la revendication 5, dans lequel la RLAU comprend une RLAU déclenchée par un événement désigné et une RLAU déclenchée périodiquement,
dans lequel la détection que l'UE (1800) a démarré la RLAU comprend :
à la suite de la réception de la signalisation de demande d'accès aléatoire envoyée par l'UE (1800), la détermination, par la station de base (1900) selon la signalisation de demande d'accès aléatoire, que l'UE (1800) a démarré la RLAU.

7. Procédé selon la revendication 5 ou 6, dans lequel la signalisation de réponse est une signalisation de réponse de récupération de connexion de commande de ressources radio, RRC,
dans lequel la transmission des données de liaison descendante à l'UE (1800) dans la signalisation de réponse correspondant à la RLAU comprend :
l'inclusion, par la station de base (1900), des données de liaison descendante dans la signalisation de réponse de récupération de connexion de RRC ; et
l'envoi, par la station de base (1900) à l'UE (1800), de la signalisation de réponse de récupération de connexion de RRC incluant les données de liaison descendante.

8. Procédé selon la revendication 5 ou 6, dans lequel la signalisation de réponse est une signalisation de réponse à accès aléatoire,
dans lequel la transmission des données de liaison descendante à l'UE (1800) dans la signalisation de réponse correspondant à la RLAU comprend :
l'inclusion, par la station de base (1900), des données de liaison descendante dans la signalisation de réponse d'accès aléatoire (810) ; et
l'envoi, par la station de base (1900) à l'UE (1800), de la signalisation de réponse d'accès aléatoire incluant les données de liaison descendante (820).

9. Procédé selon la revendication 8, dans lequel la signalisation de réponse d'accès aléatoire comprend en outre une signalisation de réponse de récupération de connexion de commande de ressources radio, RRC.

10. Dispositif de transmission de données, par exemple un équipement utilisateur, UE, (1800), le dispositif comprenant un processeur (1809) et une mémoire (1802),
dans lequel la mémoire (1802) est adaptée pour stocker une instruction exécutable par le processeur (1809),
dans lequel le processeur (1809) est adapté pour exécuter le procédé selon l'une quelconque des revendications 1 à 3.
